# EUROPÄISCHE PATENTSCHRIFT

(11) **EP 2 495 484 B1**
(45) Veröffentlichungstag und Bekanntmachung des Hinweises auf die Patenterteilung: **10.07.2013**
(21) Anmeldenummer: 12156876.0
(22) Anmeldetag: 24.02.2012
(51) Int. Cl.: F16L 37/098, F16L 25/00

(54) **Rohrverbindungsvorrichtung und Rohrverbindungsanordnung**
Pipe connection device and pipe connection assembly
Dispositif de liaison de conduits et agencement de jonction de conduites

(30) Priorität: 01.03.2011 DE 102011004925
(43) Veröffentlichungstag der Anmeldung: 05.09.2012
(73) Patentinhaber: Fränkische Industrial Pipes GmbH & Co. KG, 97486 Königsberg (DE)
(72) Erfinder: Krauss, Manfred, 97265 Hettstadt (DE); Schröter, Sören, 96103 Hallstadt (DE)
(74) Vertreter: Herzog, Markus

(56) Entgegenhaltungen:
- WO-A1-98/40656
- FR-A1- 2 906 004

## Beschreibung

Die Erfindung betrifft eine Rohrverbindungsvorrichtung, welche im montierten Zustand eine im Wesentlichen zylindrische Grundform aufweist, wobei ein erster Längenabschnitt der zylindrischen Grundform wenigstens einen nach radial innen abstehenden Vorsprung aufweist, der dazu bestimmt ist, mit einem Rohr in formschlüssigen Eingriff zu treten, während ein zweiter Längenabschnitt der zylindrischen Grundform mit Haltemitteln ausgebildet ist, die dazu bestimmt sind, mit einem Anschlussstutzen, mit dem das Rohr zu verbinden ist, in formschlüssigen Eingriff zu treten, wobei die zylindrische Grundform wenigstens drei Teilschalen umfasst, welche jeweils einen Umfangsabschnitt der Grundform bilden und über einstückig angeformte, im Wesentlichen in Richtung der Zylinderachse verlaufende Filmscharniere miteinander verbunden sind, wobei an den beiden in Umfangsrichtung endständigen Teilschalen miteinander zusammenwirkende Verschlussmittel vorgesehen sind.

Derartige Rohrverbindungsvorrichtungen werden beispielsweise in der Automobilindustrie dazu verwendet, einen leckage- und störungsfreien Transport von Flüssigkeiten oder Gasen von einem Rohr zu einem anderen Rohr oder einem anderen Bauteil zu ermöglichen, beispielsweise in Vorrichtungen zur Belüftung von Fahrzeuginnenräumen oder Scheibenwaschanlagen. Sie werden jedoch auch auf anderen technischen Gebieten und beispielsweise in Vorrichtungen zur Führung oder zum Schutz von Kabeln oder Leitungen eingesetzt.

Aus der EP 0 528 101 A1 ist eine Rohrverbindungsvorrichtung bekannt, welche drei Teilschalen zum formschlüssigen Eingriff mit einem anzuschließenden Rohr aufweist. An der mittleren Teilschale ist ein Rohrstutzen mit einem Außengewinde einstückig angeformt, welches als Halteelement für einen Anschlussstutzen dient.

Da das Aufschrauben des anzuschließenden Rohrs als mühsam und aufwändig angesehen wurde, wurden im Stand der Technik auch schon Steckverbindungsvorrichtungen für Rohre vorgeschlagen. Die bekannten Steckverbindungsvorrichtungen sind jedoch mehrteilig ausgebildet, so dass eine aufwändige Vormontage erforderlich ist.

Der Vollständigkeit halber sei zum Stand der Technik ferner auf die EP 0 442 505 A2 und die DE 43 15 175 A1 hingewiesen.

Es ist nach einem ersten Aspekt Aufgabe der Erfindung, eine Rohrverbindungsvorrichtung anzugeben, welche es ermöglicht, die Vorteile von Steckverbindungen, insbesondere deren einfache Montage, zu erreichen und dabei die Nachteile von Steckverbindungen, insbesondere deren aufwändige Vormontage, zu vermeiden.

Diese Aufgabe wird erfindungsgemäß durch eine Rohrverbindungsvorrichtung der eingangs genannten Art gelöst, bei welcher die Haltemittel ein Halteelement umfassen, das als im Wesentlichen U-förmiger Haltebügel ausgebildet ist, wobei die freien Enden der Seitenschenkel der U-Form mit einer der Teilschalen einstückig verbunden sind. Auf diese Weise ist es Benutzern möglich, die Rohrverbindungsvorrichtung schnell und umkompliziert mit einem Anschlussstutzen in Eingriff zu bringen, wobei eine aufwändige Vormontage wegen der einstückigen Ausbildung entfällt.

Um den, vorzugsweise zwischen den beiden Seitenschenkeln der U-Form aufgenommenen, Anschlussstutzen sicher halten zu können, wird in Weiterbildung der Erfindung vorgeschlagen, dass an den beiden Seitenschenkeln der U-Form jeweils ein nach radial innen abstehender Vorsprung vorgesehen ist, der zum formschlüssigen Eingriff mit dem Anschlussstutzen bestimmt ist. Vorteilhafterweise erfolgt der Formschluss dadurch, dass der Vorsprung einen Abschnitt des Anschlussstutzens hintergreift und diesen dadurch in axialer Richtung an der Rohrverbindungsvorrichtung sichert. Der Vorsprung weist vorzugsweise auf seiner dem ersten Längenabschnitt der zylindrischen Grundform abgewandten Seite eine Schrägfläche auf, die von radial außen nach radial innen in Richtung zum ersten Längenabschnitt hin geneigt ist. Diese Schrägfläche kann als Einweisungsschräge für den Anschlussstutzen dienen und das Zusammenführen von Anschlussstutzen und Rohrverbindungsvorrichtung erleichtern.

Die Rohrverbindungsvorrichtung ist vorteilhafterweise so ausgebildet, dass das Halteelement von dem freien Ende des zweiten Längenabschnitts der zylindrischen Grundform einen vorbestimmten Abstand aufweist. Der Abstand ist vorzugsweise in einer Längsrichtung entlang der Zylinderachse der Rohrverbindungsvorrichtung ausgebildet und kann für einen Schutz des Halteelements sorgen, beispielsweise vor unerwünschten mechanischen Einflüssen, insbesondere unerwünschter Belastung oder Druckbeaufschlagung, und vor Verschmutzung, Witterung oder sonstigen chemischen oder mechanischen Einwirkungen. Somit kann das Halteelement vollständig im Inneren der Rohrverbindungsvorrichtung angeordnet und damit vor äußeren Einflüssen geschützt werden. Hierdurch kann insbesondere die Gefahr einer unbeabsichtigten Beschädigung des Halteelements reduziert, wenn nicht gar vollständig ausgeschlossen werden.

Gemäß einer vorteilhaften Weiterbildung kann der Basissteg der U-Form des Halteelements in einer von zwei weiteren Teilschalen gebildeten Ausnehmung aufgenommen sein. Hierdurch können über den Basissteg Kräfte, die von dem Anschlussstutzen auf das Halteelement ausgeübt werden, über die Anlage des Halteelements an den Begrenzungsflächen der Ausnehmung in die Rohrverbindungsvorrichtung eingeleitet werden. Dies kann die Beschädigungsgefahr reduzieren und die Betriebssicherheit der Rohrverbindungsvorrichtung erhöhen. Weiterhin kann hierdurch das Halteelement insbesondere in Umfangsrichtung vor unerwünschten mechanischen oder chemischen Einflüssen geschützt in der Rohrverbindungsvorrichtung aufgenommen sein und dabei dennoch gewünschtenfalls mittels des in der Ausnehmung aufgenommenen Basisstegs betätigt werden. Gleichzeitig kann die Aufnahme des Basisstegs in einer aus zwei Teilschalen gebildeten Ausnehmung ein Freilegen des Basisstegs ermöglichen, vorzugsweise durch Aufklappen der die Ausnehmung bildenden Teilschalen.

Ferner ist es vorteilhaft, wenn die Ausnehmung als Fenster in der Oberfläche der zylindrischen Grundform der Rohrverbindungsvorrichtung ausgebildet ist. Dies kann den Zugriff des Benutzers auf den Basissteg ermöglichen. Insbesondere kann der Basissteg der U-Form des Halteelements durch dieses Fenster manipulierbar, beispielsweise nach innen drückbar, sein, wodurch sich die Seitenschenkel der U-Form aufweiten und den formschlüssigen Eingriff mit dem Anschlussstutzen freigeben, so dass der Anschlussstutzen von der Rohrverbindungsvorrichtung wieder entfernt werden kann. Besonders einfach ist der Basissteg manipulierbar, wenn er zumindest teilweise aus dem Fenster vorsteht.

Gemäß einer weiteren vorteilhaften Ausgestaltung kann wenigstens ein Seitenschenkel der U-Form des Halteelements an seinem mit dem Basissteg der U-Form verbundenen Ende oder/und an seinem mit der zugeordneten Teilschale verbundenen Ende flexibel ausgebildet sein. Hierdurch kann das Verbinden der Rohrverbindungsvorrichtung mit dem Anschlussstutzen bzw. das Manipulieren des Basisstegs zum Öffnen der Steckverbindung erleichtert werden. Die gewünschte Flexibilität kann beispielsweise durch eine gezielt dünne Ausbildung des Seitenschenkels in diesen Bereichen erzielt werden.

Vorzugsweise ist der wenigstens eine Seitenschenkel an wenigstens einem seiner. Enden federelastisch ausgebildet, so dass das Halteelement zur Erleichtung des Einführens des Anschlussstutzens in die Rohrverbindungsvorrichtung oder/und des Lösens des Anschlussstutzens aus dieser in einen vorgespannten Zustand versetzt werden kann, vorzugsweise durch Manipulieren des Basisstegs. Diese Eigenschaft ist insbesondere dann vorteilhaft, wenn ein Innendurchmesser des Halteelements in einem entspannten Zustand in einer zur Zylinderachse orthogonalen Ebene kleiner als ein Außendurchmesser eines in die Rohrverbindungsvorrichtung einzuführenden Anschlussstutzens, in einem vorgespannten Zustand jedoch größer als der Außendurchmesser des Anschlussstutzens ist.

In Weiterbildung der Erfindung wird vorgeschlagen, dass ein weiteres Halteelement über Sollbruchstellen, die vorzugsweise nach Art eines Filmscharniers ausgebildet sind und vorzugsweise bei der ersten Betätigung brechen oder sich verformen, einstückig an dem einen Halteelement angeformt ist. Dabei kann das weitere Halteelement als eine die Wirkung des ersten Halteelements ergänzende Sekundärverriegelung dienen, wobei vorzugsweise ein, zum Beispiel formschlüssiger, Eingriff mit dem Anschlussstutzen erst dann möglich ist, wenn der Anschlussstutzen bei der Verbindung von Rohrverbindungsvorrichtung und Anschlussstutzen eine gewünschte Endposition relativ zu dem ersten Halteelement erreicht hat.

Ferner ist es vorteilhaft, wenn das weitere Halteelement im Wesentlichen U-förmig ausgebildet ist, wobei die freien Enden der Seitenschenkel der U-Form mit Widerhakenansätzen ausgebildet sind. Es ist ferner vorteilhaft, wenn diese Widerhakenansätze das weitere Halteelement, nachdem die freien Enden der Seitenschenkel zugehörige Öffnungen des zweiten Längenabschnitts der Rohrverbindungsvorrichtung durchsetzt haben, vorzugsweise erst nach Erreichen einer Endposition des Anschlussstutzens relativ zu den Haltemitteln, an der Rohrverbindungsvorrichtung verrasten. Dabei ist es bevorzugt, wenn diese Verrastung einer Manipulation nur eines der Widerhakenansätze widersteht. Auf diese Weise kann sichergestellt werden, dass die Verbindung von Rohrverbindungsvorrichtung und Anschlussstutzen nur durch gleichzeitige Betätigung beider Widerhakenansätze lösbar ist, also beispielsweise dadurch, dass die freien Enden der Seitenschenkel der U-Form oder/und die daran ausgebildeten Widerhakenansätze aufeinander zu bewegt oder zusammengedrückt werden.

Wie bereits in der vorstehenden Diskussion angeklungen ist, kann die Verrastung der Widerhakenansätze des weiteren Halteelements an der Rohrverbindungsvorrichtung lösbar sein. Grundsätzlich sind jedoch auch Ausführungsformen mit dauerhafter Verrastung denkbar.

Ferner kann sich jede der Teilschalen der erfindungsgemäßen Rohrverbindungsvorrichtung im Wesentlichen über die gesamte Länge der zylindrischen Grundform erstrecken. Hierdurch kann die Beständigkeit der Rohrverbindungsvorrichtung gegenüber äußeren Einflüsse weiter verbessert werden. Dies hat sich insbesondere gegenüber der aus der EP 0 528 101 A1 bekannten Rohrverbindungsvorrichtung als vorteilhaft erwiesen, bei welcher die beiden endständigen Teilschalen nur entlang eines Längenabschnitts der Rohrverbindungsvorrichtung ausgebildet sind, so dass die übrigen Längenabschnitte äußeren Einflüssen ungeschützt ausgesetzt sind.

Nach einem weiteren Gesichtspunkt wird die erfindungsgemäße Aufgabe durch eine Rohrverbindungsanordnung gelöst, welche umfasst:
- eine erfindungsgemäße Rohrverbindungsvorrichtung gemäß einer der vorhergehend diskutierten Ausgestaltungen,
- ein Rohr, in dessen äußerer Umfangsfläche wenigstens eine sich in Umfangsrichtung erstreckende Vertiefung ausgebildet ist, die zum formschlüssigen Eingriff mit dem wenigstens einen nach radial innen abstehenden Vorsprung des ersten Längenabschnitts der Rohrverbindungsvorrichtung bestimmt ist, und
- einen Anschlussstutzen mit einer nach radial außen abstehenden Ringschulter, die zum formschlüssigen Eingriff mit dem Halteelement bestimmt ist.

Hinsichtlich der Vorteile dieser Rohrverbindungsanordnung kann auf die vorstehende Diskussion der erfindungsgemäßen Rohrverbindungsvorrichtung verwiesen werden.

Wenn der Anschlussstutzen einen in das Rohr einführbaren Abschnitt umfasst, erhöht dies die Stabilität der Verbindung von Anschlussstutzen und Rohr. Wenn sich die Ringschulter stets außerhalb des Rohr befindet, kann sichergestellt werden, dass sie stets von den nach radial innen abstehenden Vorsprüngen der beiden Seitenschenkel hintergriffen werden kann.

Die Rohrverbindungsanordnung umfasst vorteilhafterweise ferner ein oder mehrere ringförmige Dichtungselemente, die zwischen einer Innenwandung des Rohrs und einer Außenwandung des in das Rohr einführbaren Abschnitts des Anschlussstutzens anordenbar sind. Dabei kann das Dichtungselement eine Wellenform aufweisen oder speziell an die Gestalt einer Dichtungsaufnahme angepasst ausgebildet sein. Ferner kann das wenigstens eine Dichtungselement aus wenigstens zwei unterschiedlichen Dichtwerkstoffen gebildet sein.

In einer weiteren vorteilhaften Ausgestaltung der Rohrverbindungsanordnung kann das Rohr ein Wellrohr sein, vorzugsweise ein Endloswellrohr, und vorzugsweise eine durch einen Schlauch, einen Gefiechtschiauch, einen Geflecht-Strickschlauch, eine Bandage oder eine Folie gebildete Ummantelung aufweisen, welche vorteilhafterweise mit dem wenigstens einen nach radial innen abstehenden Vorsprung des ersten Längenabschnitts der zylindrischen Grundform der Rohrverbindungsvorrichtung in Eingriff steht.

Das Wellrohr kann ausschließlich die ihm seine Wellrohreigenschaft verleihenden Wellenberge und Wellentäler aufweisen. In diesem Fall greift der wenigstens eine nach radial innen abstehende Vorsprung des ersten Längenabschnitts der Rohrverbindungsvorrichtung in wenigstens eines der Wellentäler ein. Es ist jedoch alternativ auch möglich, dass das Wellrohr an seinem zur Verbindung mit der Rohrverbindungsvorrichtung bestimmten Ende einen im Wesentlichen glattwandigen Rohrabschnitt aufweist, der mit wenigstens einer in Umfangsrichtung verlaufenden Ausnehmung oder/und wenigstens einem in Umfangsrichtung verlaufenden Vorsprung ausgebildet ist, welche bzw. welcher zum formschlüssigen Eingriff mit dem wenigstens einen nach radial innen abstehenden Vorsprung des ersten Längenabschnitts der Rohrverbindungsvorrichtung bestimmt ist. In beiden Alternativen ist es zudem möglich, dass das Rohr mit einer Ummantelung, vorzugsweise einem Geflechtschlauch oder einer anderen der vorstehend genannten Umhüllungen, ummantelt ist. In diesem Fall kann es vorteilhaft sein, wenn die. Rohrverbindungsvorrichtung in ihrem ersten Längenabschnitt zwei Arten von nach radial innen abstehenden Vorsprüngen aufweist, nämlich eine erste Art, die zum formschlüssigen Eingriff mit dem Rohr bestimmt ist, und eine zweite Art, deren Hauptfunktion darin besteht, die Ummantelung an dem Rohr zu halten. Es können auch mehrere Vorsprünge der ersten bzw. der zweiten Art vorhanden sein. Die Ummantelung kann als Abrasionsschutz, als Schutz gegen radiale Ausdehnung durch Berstdruck sowie als Schutz gegen Ausdehnung in Längsrichtung der Rohrverbindungsanordnung parallel zur Zylinderachse der Rohrverbindungsvorrichtung, zur thermischen Isolierung sowie zur Verstärkung des Rohrs dienen.

Die vorliegende Erfindung wird nachfolgend anhand der beiliegenden Figuren an drei Auführungsbeispielen näher beschrieben werden. Es stellt dar:
- Fig. 1: eine erste Ausführungsform der erfindungsgemäßen Rohrverbindungsanordnung in einem demontierten Zustand in perspektivischer Ansicht;
- Fig. 2: die erste Ausführungsform der erfindungsgemäßen Rohrverbindungsanordnung in einem montierten Zustand in perspektivischer Ansicht;
- Fig. 3: die erste Ausführungsform der erfindungsgemäßen Rohrverbindungsanordnung in dem montierten Zustand in einem Längsschnitt;
- Fig. 4: die Rohrverbindungsvorrichtung der ersten Ausführungsform der erfindungsgemäßen Rohrverbindungsanordnung in perspektivischer Ansicht;
- Fig. 5: eine zweite-Ausführungsform der erfindungsgemäßen Rohrverbindungsanordnung in einem montierten Zustand in einem Längsschnitt;
- Fig. 6a: eine zweite Ausführungsform der erfindungsgemäßen Rohrverbindungsvorrichtung mit dem weiteren Halteelement in einem entrasteten Zustand in perspektivischer Ansicht;
- Fig. 6b: die zweite Ausführungsform der erfindungsgemäßen Rohrverbindungsvorrichtung mit dem weiteren Halteelement in einem verrasteten Zustand in perspektivischer Ansicht;
- Fig. 7: eine vergrößerte Darstellung eines die Widerhakenansätze umfassenden Abschnitts der zweiten Ausführungsform der erfindungsgemäßen Rohrverbindungsvorrichtung;
- Fig. 8: eine dritte Ausführungsform der erfindungsgemäßen Rohrverbindungsanordnung in einem montierten Zustand in perspektivischer Ansicht;
- Fig. 9: die dritte Ausführungsform der erfindungsgemäßen Rohrverbindungsanordnung in einem montierten Zustand in einem Längsschnitt; und

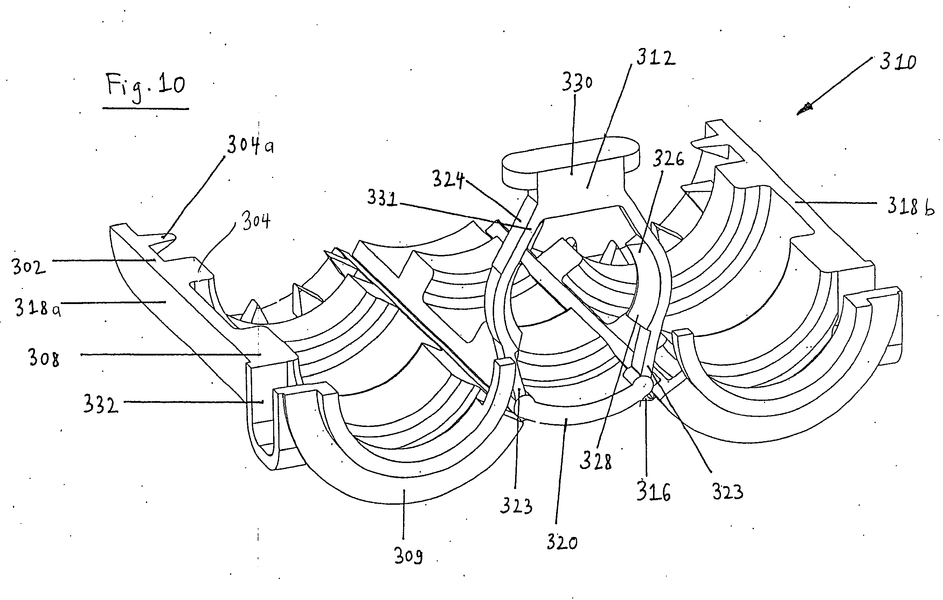

- Fig. 10: eine dritte Ausführungsform der erfindungsgemäßen Rohrverbindungsvorrichtung in perspektivischer Ansicht.

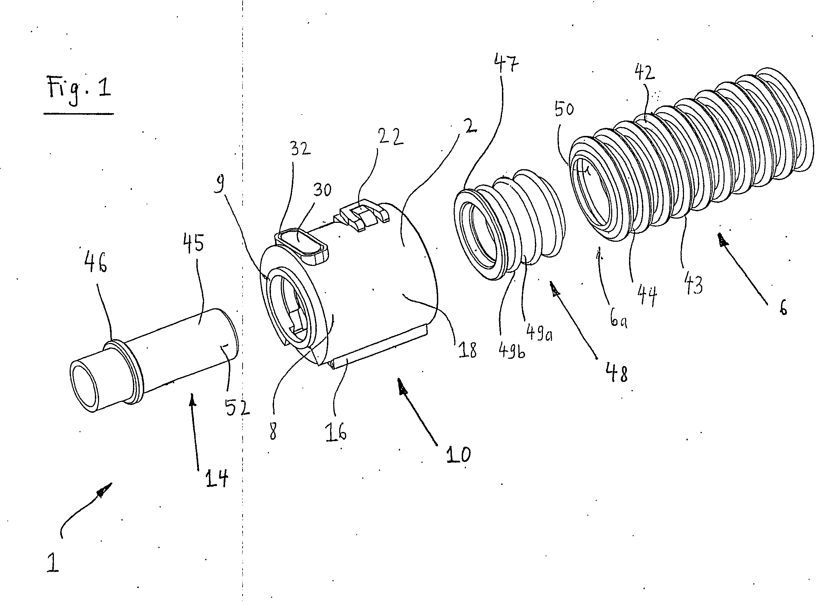

In Figur 1 ist eine erste Ausführungsform der in einem demontierten Zustand dargestellten erfindungsgemäßen Rohrverbindungsanordnung ganz allgemein mit 1 bezeichnet. Die Rohrverbindungsanordnung 1 umfasst ein Rohr 6, in dessen äußerer Umfangsfläche 42 wenigstens eine sich in Umfangsrichtung des Rohres erstreckende Vertiefung 44 ausgebildet ist. Im dargestellten Ausführungsbeispiel ist das Rohr 6 ein Wellrohr, das eine Mehrzahl von sich in Umfangsrichtung des Rohres erstreckenden Vertiefungen 44 aufweist, die von den Wellentälern des Wellrohrs 6 gebildet sind. Die zwischen diesen Wellentälern 44 angeordneten Wellenberge sind in Figur 1 mit 43 bezeichnet. Ferner umfasst die Rohrverbindungsanordnung 1 eine Rohrverbindungsvorrichtung 10, einen Anschlussstutzen 14 und vorteilhafterweise ein Dichtungselement 48.

Das Rohr 6, die Rohrverbindungsvorrichtung 10, der Anschlussstutzen 14 und das Dichtungselement 48 sind jeweils gesondert ausgebildete Komponenten mit im Wesentlichen hohlzylindrischer Grundgestaltung. Dabei umfasst die Rohrverbindungsvorrichtung 10 eine Aneinanderreihung von die zylindrische Grundform bildenden Schalen und wenigstens ein von einer der Schalen im Wesentlichen orthogonal abstehendes Halteelement. Die Rohrverbindungsvorrichtung 10 und der Anschlussstutzen 14 sind vorteilhafterweise aus einem Kunststoffmaterial gebildete Spritzgussteile, während das Rohr 6 vorteilhafterweise im Extrusionsverfahren aus Kunststoff hergestellt ist und das Dichtungselement 48 aus einem elastischen Dichtungsmaterial, beispielsweise Gummi, gefertigt ist, beispielsweise ebenfalls als Spritzgussteil.

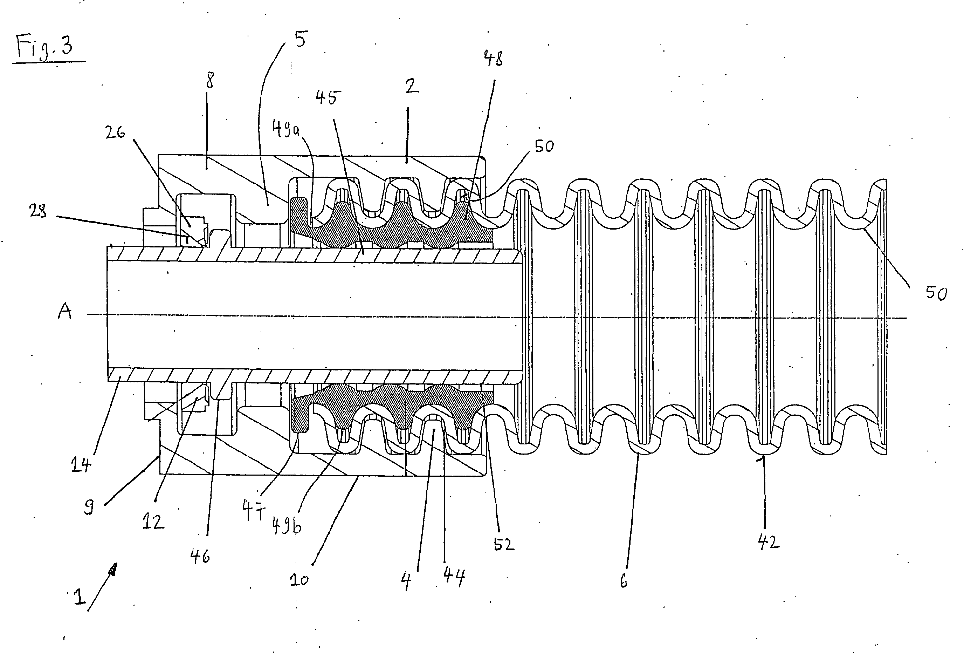

Das Dichtungselement 48 ist zwischen einer Innenwandung 50 des Rohrs 6 und einer Außenwandung 52 eines in das Rohr 6 einführbaren Abschnitts 45 des Anschlussstutzens 14 anordenbar. Ist das Rohr 6 ein Wellrohr, so kann das Dichtungselement 48 ebenfalls gewellt ausgebildet sein, um eine möglichst effektive Dichtung bereitstellen zu können. Dabei ist die Wellung des Dichtungselements 48 vorteilhafterweise an jene des Rohr 6 angepasst. Insbesondere können die Periodenlängen der beiden Wellungen im Wesentlichen identisch sein, während die Amplitude der Wellung des Dichtungselements 48 kleiner sein kann als jene der Wellung des Rohrs 6, jedoch ausreicht, damit sich die Wellenberge 49b des Dichtungselements 48 dichtend an die Innenwandung 50 des Rohrs 6 anschmiegen können (siehe Figur 3).

Ferner kann der im Bereich der Wellentäler 49a des Dichtungselements 48 gemessene Innendurchmesser des Dichtungselements 48 kleiner sein als der Durchmesser der Außenwandung 52 des in das Rohr 6 einführbaren Abschnitts 45 des Anschlussstutzens 14, so dass dieser vorteilhafterweise hohlzylindrisch ausgebildete Abschnitt 45 das Dichtungselement 48 zum Herbeiführen der Dichtungsfunktion beim Einführen in das Rohr 6 komprimieren kann.

Schließlich kann das Dichtungselement 48, vorzugsweise in der Nähe seines von dem Rohr 6 abgewandten Längsendes, einen radial nach außen abstehenden Ringflansch 47 aufweisen, der im montierten Zustand der Rohrverbindungsanordnung 1 vorteilhafterweise aus dem Rohr 6 heraussteht. Dabei kann die radiale Erstreckung des Ringflansches 47 so weit reichen, dass er im montierten Zustand der Rohrverbindungsanordnung 1 als Puffer zwischen dem Rohr 6 und der Rohrverbindungsvorrichtung 10, vorteilhafterweise zwischen dem Rohr 6 und einer Ringschulter 5 der Rohrverbindungsvorrichtung 10, dienen kann.

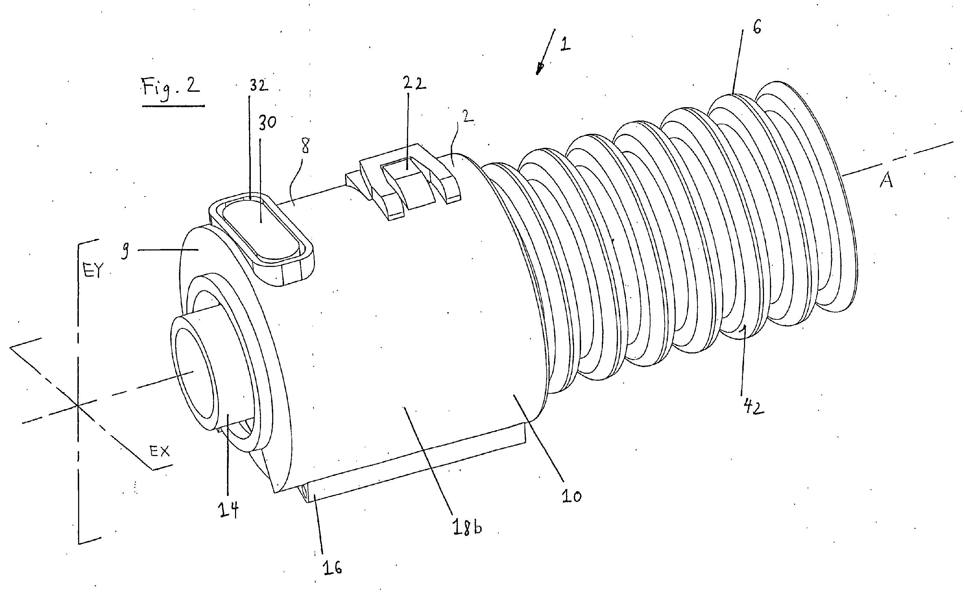

Wie in der Figur 2 dargestellt ist, weist die Rohrverbindungsvorrichtung 10 im montierten Zustand eine im Wesentlichen zylindrische Grundform auf. Ein erster Längenabschnitt 2 dieser Grundform weist wenigstens einen von seiner Innenumfangsfläche nach radial innen abstehenden Vorsprung 4 auf, der dazu bestimmt ist, in eine sich bezüglich des Rohr 6 in Umfangsrichtung erstreckende Vertiefung 44 formschlüssig einzugreifen. Ein zweiter Längenabschnitt 8 ist mit im Folgenden noch näher zu beschreibenden Haltemitteln 12 ausgebildet, um mit einem mit einem Längsende 6a des Rohrs 6 zu verbindenden Anschlussstutzen 14 in formschlüssigen Eingriff zu treten.

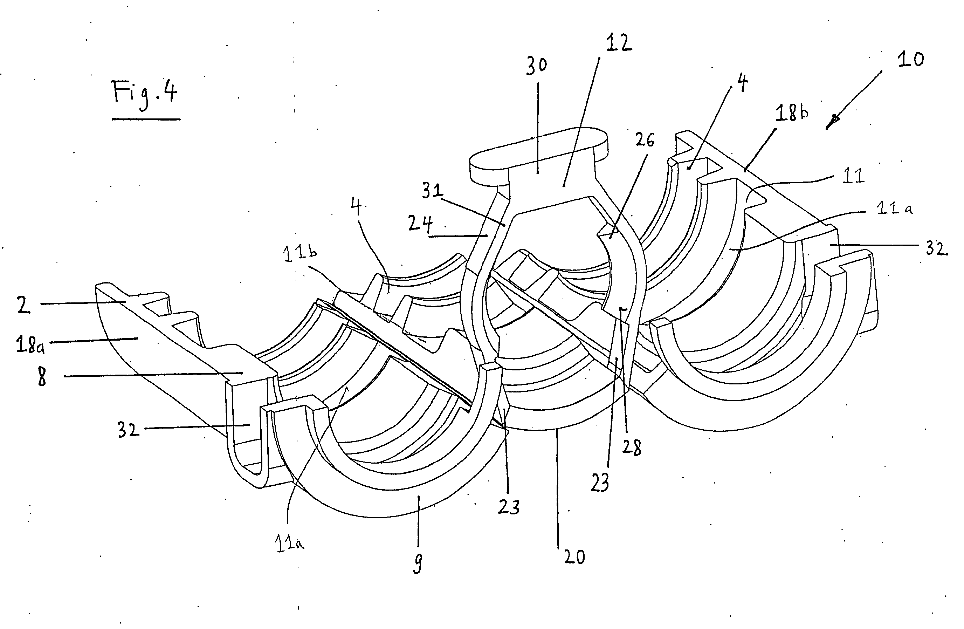

Wie in der Figur 4 zu erkennen ist, umfasst die Rohrverbindungsvorrichtung 10 wenigstens, vorzugsweise genau, 3 Teilschalen 18a, 18b, 20, welche jeweils einen Umfangsabschnitt der im montierten Zustand der Rohrverbindungsvorrichtung 10 im Wesentlichen zylindrischen Grundform der Rohrverbindungsvorrichtung 10 bilden. Jede der Teifschalen erstreckt sich in Richtung der Zylinderachse A der zylindrischen Grundform im Wesentlichen über die gesamte Länge der Rohrverbindungsvorrichtung 10. Die wenigstens drei Teilschalen 18a, 18b, 20 sind über einstückig angeformte, im Wesentlichen in Richtung der Zylinderachse A verlaufende Filmscharniere 16 kettenartig miteinander verbunden. Die beiden in Umfangsrichtung endständigen Teilschalen 18a, 18b sind bezüglich einer durch die Zylinderachse A und eine mittlere Teilschale 20 verlaufenden Ebene EY im Wesentlichen spiegelsymmetrisch zueinander ausgebildet sind.

Die Haltemittel 12 umfassen ein Halteelement 12, das als ein im Wesentlichen U-förmiger Haltebügel mit einem Basissteg 30 und zwei mit diesem einstückig ausgebildeten Seitenschenkeln 24 bereitgestellt ist. Das Halteelement 12 weist vorzugsweise von dem freien Ende 9 des zweiten Längenabschnitts 8 der zylindrischen Grundform der Rohrverbindungsvorrichtung 10 einen vorbestimmten Abstand auf. Der Basissteg 30 der U-Form weist in einer zu der Zylinderachse A orthogonalen Richtung zwei Längsenden auf, wobei sich von jedem Längsende einer der Seitenschenkel 24 erstreckt. Die von dem Basissteg 30 abgewandten freien Enden 23 der Seitenschenkel 24 der U-Form sind jeweils mit einem Abschnitt der wenigstens 3 Teilschalen, vorzugsweise mit einem Abschnitt einer mittleren Teilschale 20, einstückig verbunden. Durch diese einstückige Ausbildung ist es möglich, die Rohrverbindungsvorrichtung 10 schnell und mühelos mit dem Anschlussstutzen 14 in Eingriff zu bringen, ohne dass eine Vormontage nötig ist.

Die Seitenschenkel 24 bilden zusammen mit dem mit diesen verbundenen Abschnitt der Teilschale 20 und dem Basissteg 30 im Wesentlichen einen Ring, durch den hindurch ein in das Rohr 6 einführbarer Abschnitt 45 des Anschlussstutzens 14 geführt werden kann. Die Haltemittel 12 erstrecken sich ebenso wie der Ring und die U-Form im Wesentlichen in einer zu der Zylinderachse A orthogonalen Ebene.

An den beiden in Umfangsrichtung endständigen Teilschalen 18a, 18b sind in den Figuren 1 und 2 dargestellte miteinander zusammenwirkende Verschlussmittel 22 vorgesehen, mittels derer die endständigen Schalen 18a, 18b zur Montage der Rohrverbindungsvorrichtung 10 vorzugsweise lösbar miteinander verbunden werden können, nachdem die durch die Filmscharniere 16 beweglich verbundenen Teilschalen 18a, 18b, 20 in die zylindrische Grundform der Rohrverbindungsvorrichtung 10 angeordnet worden sind.

An den beiden Seitenschenkeln 24 ist jeweils ein nach innen zu einer Symmetrieachse der U-Form hin abstehender Vorsprung 26 ausgebildet, wobei sich beide Vorsprünge 26 vorzugsweise gegenüberliegen und von einer zu der Ebene EY senkrecht stehenden Ebene EX durchsetzt werden. Jeder der Vorsprünge 26 verrastet in einem montierten Zustand der Rohrverbindungsanordnung 1 den Anschlussstutzen 14 an der Rohrverbindungsvorrichtung 10, vorzugsweise durch Hintergreifen des in das Rohr 6 einführbaren Abschnitts 45 des Anschlussstutzens 14, noch bevorzugter durch Hintergreifen einer an diesem Abschnitt 45 ausgebildeten Ringschulter 46. Ferner weist jeder der Vorsprünge 26 vorzugsweise auf seiner dem ersten Längenabschnitt 2 abgewandten Seite eine Schrägfläche 28 auf, die von radial außen nach radial innen in Richtung zu dem ersten Längenabschnitt 2 hin geneigt ist, wobei die Schrägflächen als Einweisungsschrägen dienen.

Zur Montage der Rohrverbindungsanordnung 1 wird zunächst das in die Rohrverbindungsvorrichtung 10 einzuführende Längsende 6a des Rohrs 6 gewünschtenfalls mit dem Dichtungselement 48 bestückt. Diese Baugruppe legt man in die in Figur 4 dargestellte demontierte Rohrverbindungsvorrichtung 10 so ein, dass das Rohrende 6a den Haltemitteln 12 zugewandt ist und gleichzeitig der wenigstens eine an dem ersten Längenabschnitt 2 der Rohrverbindungsvorrichtung 10 und vorzugsweise an einer mittleren Teilschale 20 ausgebildete, radial nach innen abstehende Vorsprung 4 in eine an dem freien Ende 6a des Rohrs 6 ausgebildete, sich in Umfangsrichtung des Rohrs 6 erstreckende Vertiefung 44 eingreift. Dann werden die Teilschalen 18a, 18b, 20 derart relativ zueinander angeordnet, dass sie die zylindrische Grundform der Rohrverbindungsvorrichtung 10 bilden. Dazu werden die endständigen Teilschalen 18a, 18b an ihren Filmscharnieren 16 um jeweils eine durch eine entsprechende Außenkante einer mittleren Teilschale 30 gebildete, zur Zylinderachse A parallele Schwenkachse verschwenkt. Dabei treten die vorzugsweise auch an den endständigen Teilschalen 18a, 18b ausgebildeten nach radial innen abstehenden Vorsprünge 4 in Eingriff mit wenigstens einer Vertiefung 44 des Rohrs 6. Die endständigen Teilschalen 18a, 18b werden durch Betätigung der daran ausgebildeten Verschlussmittel 22 aneinander festgelegt. In die so gebildete Baugruppe führt man anschließend den in das Rohr 6 einführbaren Abschnitt 45 des Anschlussstutzens 14 durch die U-förmigen Haltebügel der Haltemittel 12 hindurch ein, bis das der Baugruppe zugewandte Längsende des Abschnitts 45 des Anschlussstutzens 14 in Anlage an die als Einweisungsschrägen wirkenden Flächen 28 gelangt.

Wenigstens einer der Seitenschenkel 24 ist an seinem mit dem Basissteg 30 verbundenen Ende 31 oder/und an seinem mit der zugeordneten Teilschale 20 verbundenen Ende vorzugsweise flexibel, beispielsweise federelastisch, ausgebildet, so dass die Seitenschenkel 24 aufgeweitet werden, wenn der Anschlussstutzen 14 und insbesondere die an diesem ausgebildete Ringschulter 46 beim Einführen gegen die Schrägflächen 28 drückt. Das Aufweiten kann zusätzlich oder alternativ durch Manipulieren des Basisstegs 30, zum Beispiel durch radiales Einwärtsdrücken des Basisstegs 30, bewirkt werden, wie nachfolgend beschrieben wird. Ferner ist der Basissteg 30 im montierten Zustand der Rohrverbindungsvorrichtung 10 vorzugsweise in einer von den endständigen Teilschalen 18a, 18b gebildeten Ausnehmung 32 aufgenommen, die vorzugsweise als ein Fenster 32 in der Oberfläche der zylindrischen Grundform ausgebildet ist. In einer noch bevorzugteren Ausführungsform ist der Basissteg 30 durch dieses Fenster 32, beispielsweise durch radiales Einwärtsdrücken, derart manipulierbar ist, dass die Seitenschenkel 24 in einer zur Zylinderachse A orthogonalen Richtung aufweiten und sich der Abstand der beiden einander radial gegenüberliegenden Vorsprüngen 26 vergrößert.

Der Anschlussstutzen 14 wird bei einem weiteren Montageschritt nach dem Aufweiten der Seitenschenkel 24 so weit in die Rohrverbindungsvorrichtung 10 und das von dieser umfasste Rohrende 6a eingeführt, bis die Ringschulter 46 die Vorsprünge 26 passiert hat und von diesen an der rohrabgewand-ten Seite der Ringschulter 46 hintergriffen wird. Dann ist die Endposition des Anschlussstutzens 14 relativ zu der Rohrverbindungsanordnung 1 erreicht und letztere fertig montiert. Vorzugsweise liegt die Ringschulter 46 im montierten Zustand auf ihrer rohrzugewandten Seite an dem Ringflansch 47 des Dichtungselements 48 oder der radial nach innen abstehenden Ringschulter 5 an.

Zur Demontage kann der Anschlussstutzen 14 von der Rohrverbindungsvorrichtung 10 wieder gelöst werden durch Manipulieren des Basisstegs 30 durch das in der zylindrischen Grundform gebildete Fenster 32, insbesondere indem man den Basissteg 30 in das Fenster 32 hineindrückt, wodurch die Seitenschenkel 24 wiederum aufweiten und den formschlüssigen Eingriff mit dem Anschlussstutzen 14 freigeben.

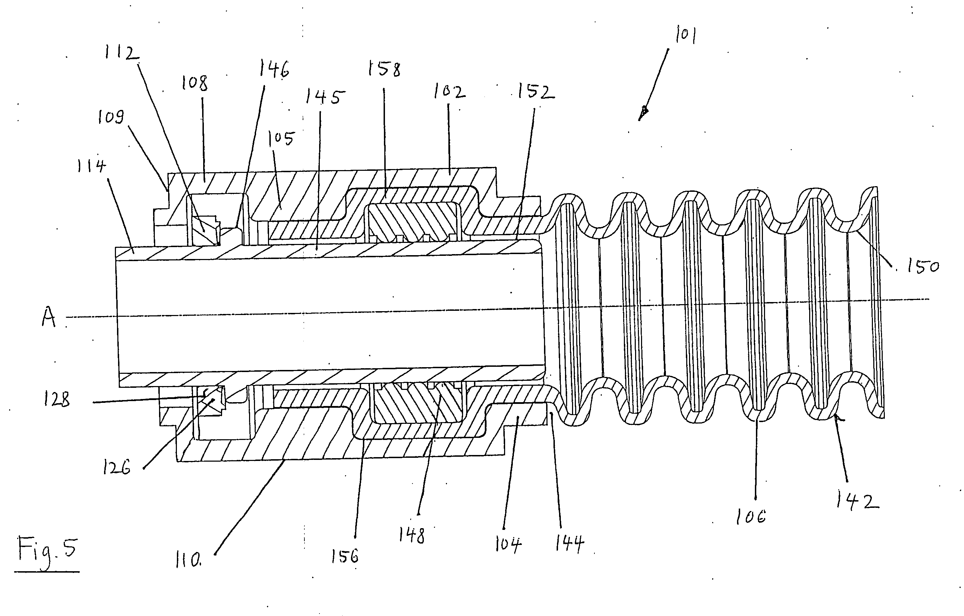

Figur 5 zeigt eine zweite Ausführungsform der erfindungsgemäßen Rohrverbindungsanordnung 101 in einem Längsschnitt entlang der Zylinderachse A. Diese Ausführungsform entspricht im Wesentlichen der Ausführungsform gemäß den Figuren 1 bis 4. Analoge Teile sind daher mit gleichen Bezugszeichen versehen wie in den Figuren 1 bis 4, jedoch vermehrt um die Zahl 100. Darüber hinaus wird die Rohrverbindungsanordnung 101 nur insoweit beschrieben werden, als sie sich von der Rohrverbindungsanordnung 1 gemäß den Figuren 1 bis 4 unterscheidet, auf deren Beschreibung ansonsten ausdrücklich verwiesen sei.

Das Rohr 6 kann als Endloswellrohr, also frei von glattwandige Rohrabschnitten, ausgebildet sein. Wenn das Rohr 6 an seinem zur Verbindung mit der Rohrverbindungsvorrichtung 10 vorgesehenen Ende 6a jedoch einen im Wesentlichen glattwandigen Rohrabschnitt 156 mit wenigstens einer in Umfangsrichtung verlaufenden Vertiefung 144 oder/und wenigstens einem in Umfangsrichtung verlaufenden Vorsprung 158 aufweist, ist die Form des wenigstens einen zum formschlüssigen Eingriff mit dem glattwandigen Rohrabschnitt 156 bestimmten Vorsprungs 104 an die Form der Ausnehmung 158 anzupassen. In der in Figur 5 dargestellten zweiten Ausführungsform der Rohrverbindungsanordnung 101 weist das freie Rohrende 6a einen im Wesentlichen glattwandigen Rohrabschnitt mit im Wesentlichen glattwandiger Außen- und Innenumfangsfläche auf, der mit einer in Umfangsrichtung verlaufenden Vertiefung 144 und einem in Umfangsrichtung verlaufenden Vorsprung 158 ausgebildet ist. Während der Vorsprung 4 gemäß der ersten Ausführungsform der Rohrverbindungsvorrichtung als sich nach radial innen verjüngender Zahn oder als eine solche Rippe ausgebildet ist, ist der Vorsprung 104 gemäß der zweiten Ausführungsform als vorzugsweise endständige Ringschulter an der zylindrischen Grundform vorgesehen. Im montierten Zustand kann ferner zwischen dem Vorsprung 158 und dem Anschlussstutzen 114 ein ringförmiges Dichtungselement 148 mit glatten Außenumfangsfläche und einer im Längsschnitt entlang der Zylinderachse A gewellten Innenumfangsfläche angeordnet sein.

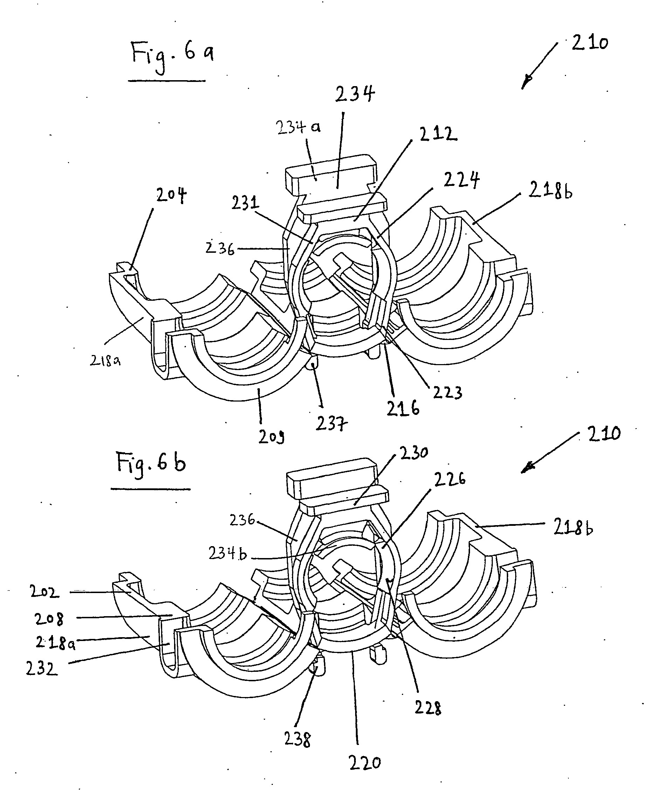

In den Figuren 6a bis 7 ist eine zweite Ausführungsform der erfindungsgemäßen Rohrverbindungsvorrichtung 210 dargestellt, wie sie beispielsweise bei der Rohrverbindungsanordnung 101 gemäß Figur 5 zum Einsatz kommen kann. Diese Ausführungsform entspricht im Wesentlichen der Ausführungsform gemäß den Figuren 1 bis 4. Analoge Teile sind daher mit gleichen Bezugszeichen gekennzeichnet wie in den Figuren 1 bis 4, jedoch vermehrt um die Zahl 200. Darüber hinaus wird die Rohrverbindungsvorrichtung 210 nur insoweit beschrieben werden, als sie sich von der Rohrverbindungsvorrichtung 10 gemäß den Figuren 1 bis 4 unterscheidet, auf deren Beschreibung ansonsten ausdrücklich verwiesen sei.

Gemäß der zweiten Ausführungsform der erfindungsgemäßen Rohrverbindungsvorrichtung 210 umfassen die Haltemittel 212 ein weiteres Halteelement 234, welches vorzugsweise wie das Halteelement 212 als im Wesentlichen U-förmiger Haltebügel ausgebildet ist, wobei die freien Enden 237 der Seitenschenkel 236 der U-Form mit einer der Teilschalen 220, vorzugsweise mit der mit den Seitenschenkeln 224 des Halteelements 212 einstückig ausgebildeten Teilschale 220, einstückig verbunden sind. An dem Basissteg 234a des weiteren Halteelements 234 ist ein nach radial einwärts abstehender Vorsprung 234b vorzugsweise um etwa 90 Grad um die Zylinderachse A versetzt zu den Vorsprüngen 226 des Halteelements 224 ausgebildet, der im montierten Zustand einer die Rohrverbindungsvorrichtung 210 umfassenden Rohrverbindungsanordnung vorzugsweise an einer Außenumfangsfläche der Ringschulter 246 des Anschlussstutzens 214 anliegt.

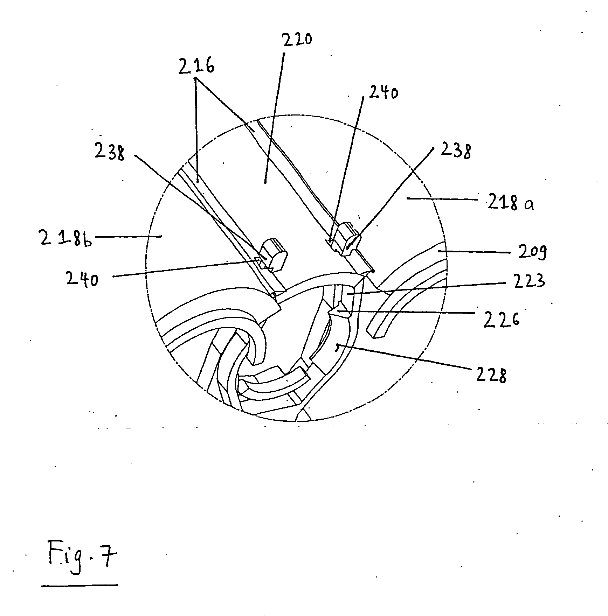

Das weitere Halteelement 234 ist vorzugsweise über nicht dargestellte Sollbruchstellen bzw. Sollverformungsstellen, die vorzugsweise nach Art eines Filmscharniers ausgebildet sind und bei der ersten Betätigung brechen oder verformt werden, einstückig an dem Halteelement 212 angeformt. An den freien Enden 237 der Seitenschenkel 236 des weiteren Halteelements 234 können Widerhakenansätze 238 ausgebildet sein. Die Figur 6a zeigt einen entrasteten Zustand der Rohrverbindungsvorrichtung 210, in welchem die freien Enden 237 in dem zweiten Längenabschnitt 208 der Rohrverbindungsvorrichtung 210 vorgesehene zugehörige Öffnungen 240 durchsetzen. Ein Verrasten des weiteren Halteelements 234 an der Rohrverbindungsvorrichtung 210 mittels der Widerhakenansätze 238, bei dem letztere eine den Öffnungen 240 benachbarte zugeordnete Teilschale 220, wie in den Figuren 6b und 7 gezeigt ist, hintergreifen, ist jedoch erst nach Erreichen einer gewünschte Endposition relativ zu dem ersten Halteelement 212 möglich.

Die mit dem weiteren Halteelement 234 bewirkte Verrastung widersteht vorzugsweise einer Manipulation nur eines der Widerhakenansätze 238, so dass der Anschlussstutzen 214 nur durch zeitgleiche Betätigung beider Widerhakenansätze 238 von der Rohrverbindungsvorrichtung 210 lösbar ist. Gemäß der hier beschriebenen zweiten Ausführungsform müssen dazu beide Widerhakenansätze 238 aufeinander zu bewegt oder zusammengedrückt werden. Alternativ oder zusätzlich können zum Lösen der Verrastung die freien Enden 237 der Seitenschenkel 236 der U-Form betätigt werden. Das weitere Halteelement 234 dient also als eine die Wirkung des Halteelements 212 ergänzende Sekundärverriegelung.

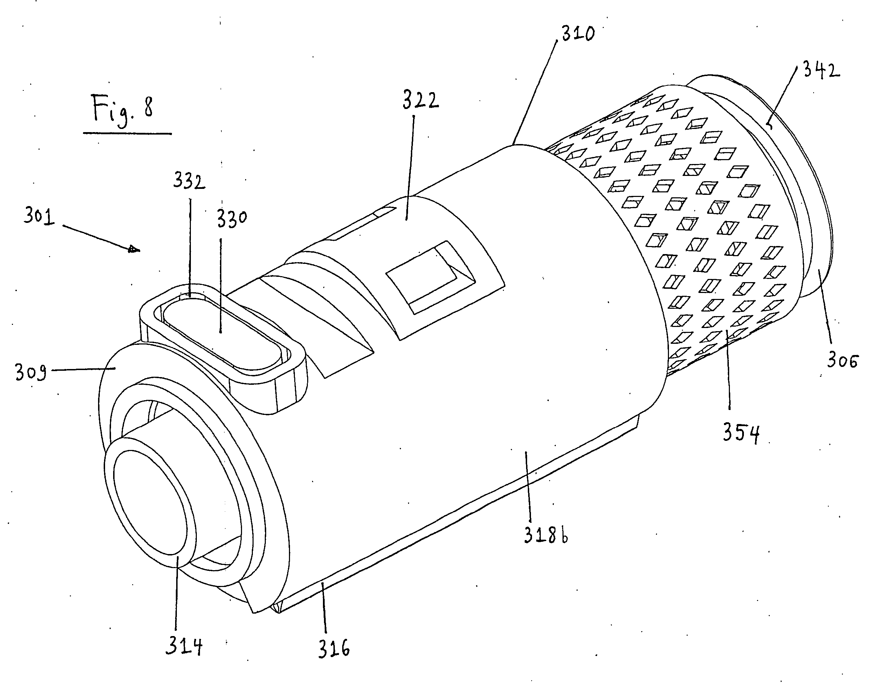

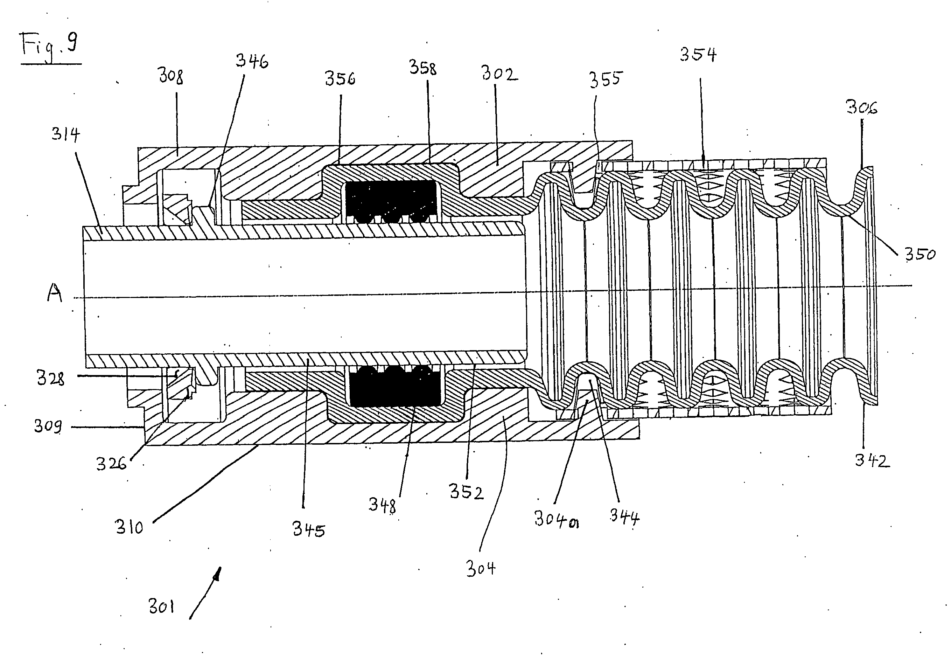

Die Figuren 8 und 9 zeigen eine dritte Ausführungsform der erfindungsgemäßen Rohrverbindungsanordnung 301, die im Wesentlichen der Ausführungsform gemäß der Figur 5 entspricht. Analoge Teile sind daher mit gleichen Bezugszeichen versehen wie in Figur 5, jedoch vermehrt um die Zahl 200. Darüber hinaus wird die Rohrverbindungsanordnung 301 nur insoweit beschrieben werden, als sie sich von der Rohrverbindungsanordnung 1 gemäß der Figur 5 unterscheidet, auf deren Beschreibung ansonsten ausdrücklich verwiesen sei.

Sowohl Endloswellrohre als auch zumindest abschnittsweise glattwandige Rohre 306 können mit einem Geflechtschlauch 354, einer Folie oder einer anderen Umhüllung 354 ummantelt sein. Vorteilhafterweise weist die Rohrverbindungsvorrichtung 310 in ihrem ersten Längenabschnitt 302 daher zwei Arten von nach radial innen abstehenden Vorsprüngen 304, 304a auf. Wenigstens ein Vorsprung 304 einer ersten Art ist, wie bereits zuvor beschrieben wurde, zum formschlüssigen Eingriff mit dem Rohr 306 bestimmt, während wenigstens ein Vorsprung 304a einer zweiten Art insbesondere dazu bestimmt ist, die beispielsweise als Geflechtschlauch ausgebildete Ummantelung 354 an dem Rohr 306 zu halten. Der Vorsprung 304a der zweiten Art kann formschlüssig in eine Vertiefung 344 des Rohrs 306 eingreifen, wozu er entsprechende Maschen 355 des Geflechtschlauches 354 oder beispielsweise in der Ummantelung zu diesem Zweck vorgesehene Durchgriffsöffnungen durchgreift. Es kann vorteilhaft sein, wenn mehrere Vorsprünge 304, 304a der ersten bzw. der zweiten Art vorhanden sind. Die Ummantelung 354 kann beispielweise als Abrasionsschutz, als Schutz gegen radiale Ausdehnung durch Berstdruck sowie als Schutz gegen Ausdehnung in Längsrichtung der Rohrverbindungsanordnung parallel zur Zylinderachse der Rohrverbindungsvorrichtung, zur thermischen Isolierung sowie zur Verstärkung des Rohrs dienen.

## Patentansprüche

1. Rohrverbindungsvorrichtung (10; 110; 210; 310), welche im montierten Zustand eine im Wesentlichen zylindrische Grundform aufweist,
wobei ein erster Längenabschnitt (2; 102; 202; 302) der zylindrischen Grundform wenigstens einen nach radial innen abstehenden Vorsprung (4; 104; 204; 304) aufweist, der dazu bestimmt ist, mit einem Rohr (6; 106; 306) in formschlüssigen Eingriff zu treten, während ein zweiter Längenabschnitt (8; 108; 208; 308) der zylindrischen Grundform mit Haltemitteln (12; 212; 312) ausgebildet ist, die dazu bestimmt sind, mit einem Anschlussstutzen (14; 114; 314), mit dem das Rohr (6; 106; 306) zu verbinden ist, in formschlüssigen Eingriff zu treten,
wobei die zylindrische Grundform wenigstens drei Teilschalen (18a, 18b, 20; 218a, 218b, 220; 318a, 318b, 320) umfasst, welche jeweils einen Umfangsabschnitt der Grundform bilden und über einstückig angeformte, im Wesentlichen in Richtung der Zylinderachse (A) verlaufende Filmscharniere (16; 216; 316) miteinander verbunden sind, wobei an den beiden in Umfangsrichtung endständigen Teilschalen (18a, 18b; 218a, 218b; 318a, 318b) miteinander zusammenwirkende Verschlussmittel (22; 322) vorgesehen sind,
**dadurch gekennzeichnet, dass** die Haltemittel (12; 212; 312) ein Halteelement (12; 212; 312) umfassen, das als im Wesentlichen U-förmiger Haltebügel ausgebildet ist, wobei die freien Enden (23; 223; 323) der Seitenschenkel (24; 224; 324) der U-Form mit einer der Teilschalen (20; 220; 320) einstückig verbunden sind.

2. Rohrverbindungsvorrichtung (10; 110; 210; 310) nach Anspruch 1,
**dadurch gekennzeichnet, dass** an den beiden Seitenschenkeln (24; 224; 324) der U-Form jeweils wenigstens ein nach radial innen abstehender Vorsprung (26; 126; 226; 326) vorgesehen ist, der zum formschlüssigen Eingriff mit dem Anschlussstutzen (14; 114; 314) . bestimmt ist, wobei der Vorsprung (26; 126; 226; 326) vorzugsweise auf seiner dem ersten Längenabschnitt (2; 102; 202; 302) der zylindrischen Grundform abgewandten Seite eine Schrägfläche (28; 128; 228; 328) aufweist, welche von radial außen nach radial innen in Richtung zum ersten Längenabschnitt (2; 102; 202; 302) hin geneigt ist.

3. Rohrverbindungsvorrichtung nach Anspruch 1 oder 2,
dadurch gekenntzeichnet, dass das Halteelement (12; 212; 312) von dem freien Ende (9; 109; 209; 309) des zweiten Längenabschnitts (8; 108; 208; 308) der zylindrischen Grundform einen vorbestimmten Abstand aufweist.

4. Rohrverbindungsvorrichtung nach einem der Ansprüche 1 bis 3,
**dadurch gekennzeichnet, dass** der Basissteg (30; 230; 330) der U-Form des Halteelements (12; 212; 312) in einer von zwei weiteren Teilschalen (18a, 18b; 218a, 218b; 318a, 318b) gebildeten Ausnehmung (32; 232; 332) aufgenommen ist.

5. Rohrverbindungsvorrichtung nach Anspruch 4,
**dadurch gekennzeichnet, dass** die Ausnehmung (32; 232; 332) als Fenster (32; 232; 332) in der Oberfläche der zylindrischen Grundform ausgebildet ist.

6. Rohrverbindungsvorrichtung nach Anspruch 5,
**dadurch gekennzeichnet, dass** durch dieses Fenster (32; 232; 332) der Basissteg (30; 230; 330) der U-Form des Halteelements (12; 212; 312) manipulierbar ist, wodurch sich die Seitenschenkel (24; 224; 324) der U-Form aufweiten und den formschlüssigen Eingriff mit dem Anschlussstutzen (14; 114; 314) freizugeben.

7. Rohrverbindungsvorrichtung nach einem der Ansprüche 1 bis 6,
**dadurch gekennzeichnet, dass** wenigstens ein Seitenschenkel (24; 224; 324) der U-Form des Halteelements (12; 212; 312) an seinem mit dem Basissteg (30; 230; 330) der U-Form verbundenen Ende (31; 231; 331) oder/und an seinem mit der zugeordneten Teilschale (20; 220; 320) verbundenen Ende (23; 223; 323) flexibel ausgebildet ist.

8. Rohrverbindungsvorrichtung nach einem der Ansprüche 1 bis 7,
**dadurch gekennzeichnet, dass** ein weiteres Halteelement (234) über Sollbruchstellen oder/und Sollverformungsstellen, die vorzugsweise nach Art eines Filmscharniers ausgebildet sind, einstückig an dem einen Halteelement (212) angeformt ist.

9. Rohrverbindungsvorrichtung nach Anspruch 8,
**dadurch gekennzeichnet, dass** das weitere Halteelement (234) im Wesentlichen U-förmig ausgebildet ist, wobei die freien Enden (237) der Seitenschenkel (236) der U-Form mit Widerhakenansätzen (238) ausgebildet sind, wobei vorzugsweise diese Widerhakenansätze (238) das weitere Halteelement (234), nachdem die freien Enden (237) der Seitenschenkel (236) zugehörige Öffnungen (240) des zweiten Längenabschnitts (208) der Rohrverbindungsvorrichtung (210) durchsetzt haben, an der Rohrverbindungsvorrichtung (210) verrasten.

10. Rohrverbindungsvorrichtung nach Anspruch 9,
**dadurch gekennzeichnet, dass** die Verrastung lösbar ist.

11. Rohrverbindungsvorrichtung nach einem der Ansprüche 1 bis 10,
**dadurch gekennzeichnet, dass** sich jede der Teilschalen (18a, 18b, 20; 218a, 218b, 220; 318a, 318b, 320) im Wesentlichen über die gesamte Länge der zylindrischen Grundform erstreckt.

12. Rohrverbindungsanordnung, umfassend:
- eine Rohrverbindungsvorrichtung (10; 110; 210; 310) nach einem der vorhergehenden Ansprüche,
- ein Rohr (6; 106; 306), in dessen äußerer Umfangsfläche (42; 142; 342) wenigstens eine sich in Umfangsrichtung erstreckende Vertiefung (44; 144; 344) ausgebildet ist, die zum formschlüssigen Eingriff mit dem wenigstens einen nach radial innen abstehenden Vorsprung (4; 104; 204; 304) des ersten Längenabschnitts (2; 102; 202; 302) der Rohrverbindungs-vorrichtung (10; 110; 210; 310) bestimmt ist, und
- einen Anschlussstutzen (14; 114; 314) mit einer nach radial außen abstehenden Ringschulter (46; 146; 346), die zum formschlüssigen Eingriff mit dem Halteelement (12; 212; 312) bestimmt ist.

13. Rohrverbindungsanordnung nach Anspruch 12,
**dadurch gekennzeichnet, dass** der Anschlussstutzen (14; 114; 314) einen in das Rohr (6; 106; 306) einführbaren Abschnitt (45; 145; 345) umfasst und sich die Ringschulter (46; 146; 346) stets außerhalb des Rohrs (6; 106; 306) befindet.

14. Rohrverbindungsanordnung nach Anspruch 12 oder 13,
**dadurch gekennzeichnet, dass** sie ferner wenigstens ein ringförmiges Dichtungselement (48; 148; 348) umfasst, welches zwischen einer Innenwandung (50; 150; 350) des Rohrs (6; 106; 306) und einer Außenwandung (52; 152; 352) des in das Rohr (6; 106; 306) einführbaren Abschnitts (45; 145; 345) des Anschlussstutzens (14; 114; 314) anordenbar ist, wobei das Dichtungselement (48; 148; 348), das vorzugsweise eine Wellenform aufweist oder/und auf eine Dichtaufnahme ausgelegt ist, gewünschtenfalls aus wenigstens zwei unterschiedlichen Dichtwerkstoffen gebildet ist.

15. Rohrverbindungsanordnung nach einem der Ansprüche 12 bis 14, **dadurch gekennzeichnet, dass** das Rohr (6; 106; 306) ein vorzugsweise endloses Wellrohr ist und vorzugsweise eine zum Beispiel durch einen Schlauch, einen Geflechtschlauch (354), einen Geflecht-Strickschlauch, eine Bandage oder eine Folie gebildete und vorzugsweise mit dem Vorsprung (304) in Eingriff stehende Ummantelung oder/und an seinem zur Verbindung mit der Rohrverbindungsvorrichtung (10; 110; 210; 310) bestimmten Ende einen im Wesentlichen glattwandigen Rohrabschnitt (156; 356) aufweist, der mit wenigstens der in Umfangsrichtung verlaufenden Vertiefung (44; 144; 344) oder/und wenigstens einem in Umfangsrichtung verlaufenden Vorsprung (158; 358) ausgebildet ist.

## Claims

1. Pipe connection device (10; 110; 210; 310) which has a substantially cylindrical basic shape when assembled, a first length portion (2; 102; 202; 302) of the cylindrical basic shape comprising at least one radially inwardly projecting projection (4; 104; 204; 304) which is intended to enter into positive engagement with a pipe (6; 106; 306), while a second length portion (8; 108; 208; 308) of the cylindrical basic shape has holding means (12; 212; 312) which are intended to enter into positive engagement with a connecting piece (14; 114; 314) to which the pipe (6; 106; 306) is to be connected, the cylindrical basic shape comprising at least three partial shells (18a, 18b, 20; 218a, 218b, 220; 318a, 318b, 320) which each form a peripheral portion of the basic shape and are interconnected via integrally formed living hinges (16; 216; 316) which extend substantially in the direction of the cylinder axis (A), interacting closure means (22; 322) being provided on the two partial shells (18a, 18b; 218a, 218b; 318a, 318b) located at the ends in the peripheral direction, **characterised in that** the holding means (12; 212; 312) comprise a holding element (12; 212; 312) which is designed as a substantially U-shaped holding bracket, the free ends (23; 223; 323) of the side arms (24; 224; 324) of the U shape being integrally connected to one of the partial shells (20; 220; 320).

2. Pipe connection device (10; 110; 210; 310) according to claim 1, **characterised in that** at least one radially inwardly projecting projection (26; 126; 226; 326) is provided on each of the two side arms (24; 224; 324) of the U shape and is intended for positive engagement with the connecting piece (14; 114; 314), the projection (26; 126; 226; 326) comprising, preferably on the side thereof remote from the first length portion (2; 102; 202; 302) of the cylindrical basic shape, a bevel (28; 128; 228; 328) which is inclined from radially outwards to radially inwards towards the first length portion (2; 102; 202; 302).

3. Pipe connection device according to either claim 1 or claim 2, **characterised in that** the holding element (12; 212; 312) has a predetermined spacing from the free end (9; 109; 209; 309) of the second length portion (8; 108; 208; 308) of the cylindrical basic shape.

4. Pipe connection device according to any of claims 1 to 3, **characterised in that** the base web (30; 230; 330) of the U shape of the holding element (12; 212; 312) is accommodated in a recess (32; 232; 332) formed by two further partial shells (18a, 18b; 218a, 218b; 318a, 318b).

5. Pipe connection device according to claim 4, **characterised in that** the recess (32; 232; 332) is designed as a window (32; 232; 332) in the surface of the cylindrical basic shape.

6. Pipe connection device according to claim 5, **characterised in that** the U shape of the holding element (12; 212; 312) can be manipulated through this window (32; 232; 332) in the base web (30; 230; 330), whereby the side arms (24; 224; 324) of the U shape open out and allow the positive engagement with the connection piece (14; 114; 314).

7. Pipe connection device according to any of claims 1 to 6, **characterised in that** at least one side arm (24; 224; 324) of the U shape of the holding element (12; 212; 312) is flexible at its end (31; 231; 331) which is connected to the base web (30; 230; 330) of the U shape and/or at its end (23; 223; 323) which is connected to the associated partial shell (20; 220; 320).

8. Pipe connection device according to any of claims 1 to 7, **characterised in that** a further holding element (234) is integrally formed on the holding element (212) via predetermined breaking points and/or predetermined deformation points which are preferably designed in the manner of a living hinge.

9. Pipe connection device according to claim 8, **characterised in that** the further holding element (234) is substantially U-shaped, the free ends (237) of the side arms (236) of the U shape having barbed formations (238), these barbed formations (238) preferably latching the further holding element (234) to the pipe connection device (210) once the free ends (237) of the side arms (236) have penetrated associated openings (240) in the second length portion (208) of the pipe connection device (210).

10. Pipe connection device according to claim 9, **characterised in that** the latching is releasable.

11. Pipe connection device according to any of claims 1 to 10, **characterised in that** each of the partial shells (18a, 18b, 20; 218a, 218b, 220; 318a, 318b, 320) extends substantially over the entire length of the cylindrical basic shape.

12. Pipe connection assembly, comprising:
- a pipe connection device (10; 110; 210; 310) according to any of the preceding claims,
- a pipe (6; 106; 306) having in its outer peripheral face (42; 142; 342) at least one indentation (44; 144; 344) which extends in the peripheral direction and is intended for positive engagement with the at least one radially inwardly projecting projection (4; 104; 204; 304) of the first length portion (2; 102; 202; 302) of the pipe connection device (10; 110; 210; 310), and
- a connecting piece (14; 114; 314) having a radially outwardly projecting annular shoulder (46; 146; 346) which is intended for positive engagement with the holding element (12; 212; 312).

13. Pipe connection assembly according to claim 12, **characterised in that** the connecting piece (14; 114; 314) comprises a portion (45; 145; 345) which can be inserted into the pipe (6; 106; 306) and the annular shoulder (46; 146; 346) is always located outside the pipe (6; 106; 306).

14. Pipe connection assembly according to either claim 12 or claim 13, **characterised in that** it further comprises at least one annular sealing element (48; 148; 348) which can be arranged between an inner wall (50; 150; 350) of the pipe (6; 106; 306) and an outer wall (52; 152; 352) of the portion (45; 145; 345) of the connecting piece (14; 114; 314), which portion can be inserted into the pipe (6; 106; 306), the sealing element (48; 148; 348), which preferably has an undulating shape and/or is designed for a sealing seat, optionally being formed of at least two different sealing materials.

15. Pipe connection assembly according to any of claims 12 to 14, **characterised in that** the pipe (6; 106; 306) is a preferably endless corrugated pipe and preferably comprises a casing, for example formed by a sleeve, a braided sleeve (354), a braided/knitted sleeve, a band or a film and preferably engaged with the projection (304), and/or, at its end intended for connection to the pipe connection device (10; 110; 21; 310), a substantially smooth-faced pipe portion (156; 356) which has at least the indentation (44; 144; 344) extending in the peripheral direction and/or at least one projection (158; 358) extending in the peripheral direction.

## Revendications

1. Dispositif de jonction de conduits (10 ; 110 ; 210 ; 310), qui présente à l'état assemblé une forme de base essentiellement cylindrique,
dans lequel un premier tronçon longitudinal (2 ; 102 ; 202 ; 302) de la forme de base cylindrique comprend au moins une partie en saillie (4 ; 104 ; 204 ; 304) orientée de manière radiale vers l'intérieur, cette disposition étant prévue pour établir un engagement par liaison de forme avec un conduit (6 ; 106 ; 306), tandis qu'un deuxième tronçon longitudinal (8 ; 108 ; 208 ; 308) de la forme de base cylindrique est doté de moyens d'immobilisation (12 ; 212 ; 312), cette disposition étant prévue pour établir un engagement par liaison de forme avec un embout de raccordement (14 ; 114 ; 314) auquel le conduit (6 ; 106 ; 306) doit être relié, et
dans lequel la forme de base cylindrique comprend au moins trois fragments de coquille (18a, 18b, 20 ; 218a, 218b, 220 ; 318a, 318b, 320) qui forment chacun respectivement une fraction de la circonférence de la forme de base et qui sont reliés les uns aux autres au moyen de charnières en film (16 ; 216 ; 316) formées d'une seule pièce et orientées essentiellement dans la direction de l'axe (A) du cylindre, des moyens de fermeture (22 ; 322) qui agissent en coopération les uns avec les autres étant prévus contre les deux fragments de coquille terminaux (18a, 18b ; 218a, 218b ; 318a, 318b) dans la direction de la circonférence,
**caractérisé en ce que** les moyens d'immobilisation (12 ; 212 ; 312) comprennent un élément de maintien (12 ; 212 ; 312) qui est réalisé à la manière d'un étrier de maintien essentiellement en forme de U, les extrémités libres (23 ; 223 ; 323) des jambages latéraux (24 ; 224 ; 324) de la forme en U formant une seule pièce avec l'un des fragments de coquille (20 ; 220 ; 320).

2. Dispositif de jonction de conduits (10; 110 ; 210; 310) selon la revendication 1,
**caractérisé en ce qu'**au moins une partie en saillie (26 ; 126 ; 226 ; 326) orientée de manière radiale vers l'intérieur est disposée contre chacun respectivement des deux jambages latéraux (24 ; 224 ; 324) de la forme en U, cette disposition étant prévue pour permettre un engagement par liaison de forme avec l'embout de raccordement (14 ; 114 ; 314), la partie en saillie (26 ; 126 ; 226 ; 326) comprenant une surface oblique (28 ; 128 ; 228 ; 328) située de préférence du côté distant du premier tronçon longitudinal (2 ; 102 ; 202 ; 302) de la forme de base cylindrique et qui a une inclinaison radiale de l'extérieur vers l'intérieur dans la direction du premier tronçon longitudinal (2 ; 102 ; 202 ; 302).

3. Dispositif de jonction de conduits selon la revendication 1 ou 2,
**caractérisé en ce que** l'élément de maintien (12 ; 212 ; 312) se situe à une distance prédéterminée par rapport à l'extrémité libre (9 ; 109 ; 209 ; 309) du deuxième tronçon longitudinal (8 ; 108 ; 208 ; 308) de la forme de base cylindrique.

4. Dispositif de jonction de conduits selon l'une des revendications 1 à 3,
**caractérisé en ce que** l'embase (30 ; 230 ; 330) de la forme en U de l'élément de maintien (12 ; 212 ; 312) vient se loger dans un évidement (32 ; 232 ; 332) formé à partir de deux des fragments de coquille (18a, 18b ; 218a, 218b ; 318a, 318b) prolongés.

5. Dispositif de jonction de conduits selon la revendication 4,
**caractérisé en ce que** l'évidement (32 ; 232 ; 332) est réalisé à la manière d'une fenêtre (32 ; 232 ; 332) dans la surface supérieure de la forme de base cylindrique.

6. Dispositif de jonction de conduits selon la revendication 5,
**caractérisé en ce que**, par cette fenêtre (32 ; 232 ; 332), l'embase (30 ; 230 ; 330) de la forme en U de l'élément de maintien (12 ; 212 ; 312) peut être manoeuvrée de telle façon que les jambages latéraux (24 ; 224 ; 324) de la forme en U s'écartent et libèrent l'engagement par liaison de forme constitué avec l'embout de raccordement (14 ; 114 ; 314).

7. Dispositif de jonction de conduits selon l'une des revendications 1 à 6,
**caractérisé en ce qu'**au moins un jambage latéral (24 ; 224 ; 324) de la forme en U de l'élément de maintien (12 ; 212 ; 312) est réalisé de manière flexible à son extrémité (31 ; 231 ; 331) reliée à l'embase (30 ; 230 ; 330) de la forme en U et/ou à son extrémité (23 ; 223 ; 323) reliée au fragment de coquille (20 ; 220 ; 320) associé.

8. Dispositif de jonction de conduits selon l'une des revendications 1 à 7, **caractérisé en ce qu'**un élément de maintien supplémentaire (234) est formé en une seule pièce contre ledit élément de maintien (212), au-dessus des positions de rupture et/ou des positions de déformation selon le type de charnière en film.

9. Dispositif de jonction de conduits selon la revendication 8,
**caractérisé en ce que** l'élément de maintien supplémentaire (234) est réalisé essentiellement en forme de U, les extrémités libres (237) des jambages latéraux (236) de la forme en U comportant des rebords (238), ces rebords (238) venant de préférence bloquer l'élément de maintien supplémentaire (234) contre le dispositif de jonction de conduits (210) après que les extrémités libres (237) des jambages latéraux (236) soient venues occuper des ouvertures associées (240) prévues dans le deuxième tronçon longitudinal (208) du dispositif de jonction de conduits (210).

10. Dispositif de jonction de conduits selon la revendication 9,
**caractérisé en ce que** le blocage est réversible.

11. Dispositif de jonction de conduits selon l'une des revendications 1 à 10,
**caractérisé en ce que** chacun des fragments de coquille (18a, 18b, 20 ; 218a, 218b, 220 ; 318a, 318b, 320) s'étend essentiellement sur la totalité de la longueur de la forme de base cylindrique.

12. Agencement de jonction de conduits, comprenant :
- un dispositif de jonction de conduits (10 ; 110 ; 210 ; 310) selon l'une des revendications précédentes,
- un conduit (6 ; 106 ; 306) dans lequel une surface circonférentielle externe (42 ; 142 ; 342) comporte au moins un évidement (44 ; 144 ; 344) s'étendant selon une direction circonférentielle, cette disposition étant prévue pour permettre un engagement par liaison de forme avec la au moins une partie en saillie (4 ; 104 ; 204 ; 304), orientée de manière radiale vers l'intérieur, du premier tronçon longitudinal (2 ; 102 ; 202 ; 302) du dispositif de jonction de conduits (10; 110 ; 210 ; 310), et
- un embout de raccordement (14 ; 114 ; 314) avec un épaulement annulaire (46 ; 146 ; 346) orienté de manière radiale vers l'extérieur, cette disposition étant prévue pour un engagement avec liaison de forme avec l'élément de maintien (12 ; 212 ; 312).

13. Agencement de jonction de conduits selon la revendication 12,
**caractérisé en ce que** l'embout de raccordement (14 ; 114 ; 314) comprend un tronçon (45 ; 145 ; 345) pouvant être introduit dans le conduit (6 ; 106 ; 306) et **en ce que** l'épaulement annulaire (46 ; 146 ; 346) est constamment situé à l'extérieur du conduit (6 ; 106 ; 306).

14. Agencement de jonction de conduits selon la revendication 12 ou 13,
**caractérisé en ce qu'**il comprend en outre au moins un élément constituant un joint de forme annulaire (48 ; 148 ; 348) qui est disposé entre une paroi interne (50 ; 150 ; 350) du conduit (6 ; 106 ; 306) et une paroi externe (52 ; 152 ; 352) de la partie (45 ; 145 ; 345) de l'embout de raccordement (14 ; 114 ; 314) qui peut être introduite dans le conduit (6 ; 106 ; 306), l'élément qui constitue un joint (48 ; 148 ; 348), et qui de préférence présente une forme ondulée et/ou est placé sur un support de joint, étant éventuellement formé d'au moins deux matériaux d'étanchéité différents.

15. Agencement de jonction de conduits selon l'une des revendications 12 à 14,
**caractérisé en ce que** le conduit (6 ; 106 ; 306) est un conduit ondulé de préférence de manière continue et **en ce que**, de préférence, il comprend un revêtement enveloppant formé par exemple d'un tube flexible, d'un manchon tressé (354), d'une gaine en corde tressée, d'une bande ou d'une feuille et qui est de préférence en liaison avec la partie en saillie (304) et/ou il comprend un tronçon de conduit (156 ; 356) essentiellement à paroi lisse à son extrémité prévue pour la jonction avec le dispositif de jonction de conduits (10 ; 110 ; 210 ; 310), le conduit étant constitué d'au moins l'évidement (44 ; 144 ; 344) formé dans la direction circonférentielle et/ou d'au moins d'une partie en saillie (158 ; 358) formée dans la direction circonférentielle.
